# DEMANDE DE BREVET EUROPEEN

(11) **EP 4 703 524 A1**
(43) Date de publication de la demande: **04.03.2026**
(21) Numéro de dépôt: 25196811.1
(22) Date de dépôt: 19.08.2025
(51) Int. Cl.: E03C 1/04, E03F 5/04, B60R 15/02, E03C 1/182, E03C 1/20, E03C 1/22, E03C 1/28, B60P 3/00

(54) **VÉHICULE AVEC SYSTÈME HYDRAULIQUE ANTI-REFOULEMENT D'AIR**

(30) Priorité: 30.08.2024 FR 2409281
(71) Demandeur: Lefebvre, François, 49120 Chemillé-en-Anjou (FR); Boudaud, Philippe, 49340 Trémentines (FR)
(72) Inventeur: LEFEBVRE, François, 49120 Chemillé-en-Anjou (FR); BOUDAUD, Philippe, 49340 Trémentines (FR)
(74) Mandataire: Lequien, Philippe

(57) **Abrégé**

L'invention concerne un système hydraulique anti-refoulement d'air, comprenant :
- un bac collecteur (100) d'eau ;
- une évacuation d'eau (2) ;
- un dispositif hydraulique anti-refoulement (3) raccordant le bac collecteur (100) à l'évacuation d'eau (2), le dispositif hydraulique anti-refoulement (3) comprenant un bouchon flotteur (31) et un bol collecteur (32) d'eau intégrant une cage (4) à l'intérieur de laquelle le bouchon flotteur (31) est mobile selon un niveau d'eau (NE) dans le bol collecteur (32).

## Description

### Domaine Technique

Le domaine de l'invention est celui de la conception et de la fabrication de système d'évacuation d'eau.

L'invention concerne plus particulièrement une évacuation d'eaux usées collectées par un équipement sanitaire, tel qu'une douche.

### État de la technique

Dans le domaine des systèmes d'évacuation d'eaux usées, les siphons collecteurs sont utilisés pour laisser s'écouler de l'eau collectée, tout en évitant le passage d'air viciée dans le sens contraire du flux d'écoulement de l'eau au travers du siphon.

Il est connu des siphons en forme de S qui permettent de conserver une garde d'eau dans un coude grâce à la gravité, pour lutter contre une remontée d'air viciée.

Il est également connu des siphons dits « en bouteille » qui comprennent un tube plongeur s'étendant à l'intérieur d'une garde d'eau au sein d'un corps de dimensions plus importantes que le tube plongeur, et qui présente à un niveau plus haut que l'extrémité débouchante du tube plongeur, une sortie d'évacuation délimitant la garde d'eau.

Il est encore connu des siphons présentant un mécanisme d'obturation élastiquement déformable, qui permettent également le maintien d'une garde d'eau et qui nécessitent une pression d'eau ou un volume d'eau minimale pour s'ouvrir et laisser s'écouler de l'eau en direction de l'évacuation d'eau.

Une alternative à ces systèmes hydrauliques de filtration est recherchée.

Les systèmes hydrauliques précédemment décrit peuvent pour certains être considérés comme complexes techniquement à produire, installer, et entretenir ce qui peut également se répercuter sur leurs coûts à l'achat, ou leurs coûts d'entretien.

### Problème technique

L'invention a notamment pour objectif de pallier ces inconvénients de l'art antérieur.

Plus précisément, l'invention a pour objectif de proposer un système hydraulique anti-refoulement d'air destiné à raccorder un bac collecteur d'eaux usées à une évacuation d'eau, qui soit simple à produire, à installer, et à entretenir.

L'invention a également pour objectif de fournir un tel système qui soit économique à produire et à entretenir.

### Résumé de l'invention

Ces objectifs, ainsi que d'autres qui apparaîtront par la suite, sont atteints grâce à l'invention qui a pour objet un véhicule routier comprenant un châssis et une cabine montée basculante sur le châssis, la cabine intégrant un système hydraulique anti-refoulement d'air, comprenant :
- un bac collecteur d'eau;
- une évacuation d'eau ;

caractérisé en ce que le système hydraulique anti-refoulement comprend :
   - un dispositif hydraulique anti-refoulement raccordant le bac collecteur à l'évacuation d'eau,
le dispositif hydraulique anti-refoulement comprenant :
   - un bouchon flotteur ;
   - un bol collecteur d'eau présentant une ouverture permettant un passage d'eau depuis le bac collecteur, un fond présentant une sortie débouchant vers l'évacuation d'eau, et une paroi périphérique s'étendant depuis un pourtour du fond jusqu'à une extrémité supérieure,
le bol collecteur intégrant une cage s'étendant en hauteur depuis le fond du bol collecteur jusqu'à un plafond, le bouchon flotteur étant mobile à l'intérieur de la cage selon un niveau d'eau dans le bol collecteur, le bouchon flotteur présentant une section obturatrice de la sortie à l'empreinte d'un rebord de la sortie, l'eau collectée dans le bol collecteur s'écoulant au travers de la sortie dès que le bouchon flotteur flotte dans le bol collecteur au-dessus de sa position d'obturation.

Le système hydraulique anti-refoulement d'air du véhicule routier selon l'invention forme une solution simple et peu onéreuse à produire et entretenir. Ce système hydraulique forme une alternative à des siphons et n'implique pas le maintien d'une garde d'eau pour éviter un refoulement d'air.

L'usage du système hydraulique est particulièrement avantageux en ce qu'il ne met pas en oeuvre une garde d'eau qui serait susceptible de se déverser dans la cabine lors d'un basculement de cette cabine.

Selon une caractéristique préférée, la sortie est circulaire, et en ce que le bouchon flotteur est formé par une sphère.

Un tel bouchon flotteur présente toujours une section obturatrice à l'empreinte du rebord de la sortie. En effet, il ne nécessite pas de présenter une orientation particulière pour pouvoir correctement obturer la sortie.

Préférentiellement, la cage comprend des tiges de guidage s'étendant en direction de la sortie.

De telles tiges de guidage permettent de réaliser un guidage adéquat tout en limitant leur encombrement dans le bol collecteur.

Avantageusement, les tiges de guidage sont solidaires d'une grille de bonde formant le plafond de la cage.

Selon une caractéristique préférée, la grille de bonde est montée amovible sur le bol collecteur.

Le retrait de la grille de bonde entraîne ainsi également le retrait des tiges de guidage ce qui permet de réaliser un entretien aisé du bol collecteur et du bouchon flotteur.

Selon une conception avantageuse, les tiges de guidage s'étendent parallèlement les unes aux autres et n'autorisent qu'un débattement axial de la sphère formant le bouchon flotteur.

Grâce à cette conception, le déplacement du bouchon flotteur est circonscrit. Ceci permet également au système hydraulique d'être utilisé dans une installation mobile dans laquelle il serait recherché à éviter des bruits de percussion du bouchon flotteur contre des parois du bol collecteur.

Préférentiellement, le véhicule routier comprend une tuyauterie d'évacuation d'eaux usées formant l'évacuation d'eau, comprenant un raccord emmanchable comprenant une partie femelle portée par le châssis, et une partie mâle portée par la cabine,
la partie mâle et la partie femelle étant désolidarisées l'une de l'autre dans une position basculée de la cabine, un passage de la cabine de sa position basculée à une position non-basculée entraînant un emmanchement de la partie mâle dans la partie femelle.

Ceci permet de n'avoir dans la cabine qu'une partie d'un circuit d'évacuation d'eaux usées qui ne contient pas d'eau précédemment collectée pas le bac collecteur du système hydraulique.

### Brève description des dessins

D'autres caractéristiques et avantages de l'invention apparaîtront plus clairement à la lecture de la description suivante de différents modes de réalisation préférentiels de l'invention, donnés à titre d'exemples illustratifs et non limitatifs, et des dessins annexés parmi lesquels :
- la figure 1 est une représentation schématique d'un système hydraulique anti-refoulement d'air d'un véhicule routier selon l'invention, comprenant un dispositif hydraulique raccordant un bac collecteur à une évacuation d'eau ;
- la figure 2 est une représentation schématique du dispositif hydraulique anti-refoulement avec une grille de bonde en cours d'extraction ;
- la figure 3 est une représentation schématique en perspective de la grille de bonde ;
- la figure 4 est une représentation schématique du dispositif anti-refoulement raccordé à une tuyauterie d'évacuation d'eau usée ;
- la figure 5 est une représentation schématique d'un basculement entre deux positions d'une cabine d'un véhicule routier selon l'invention.

### Description détaillée

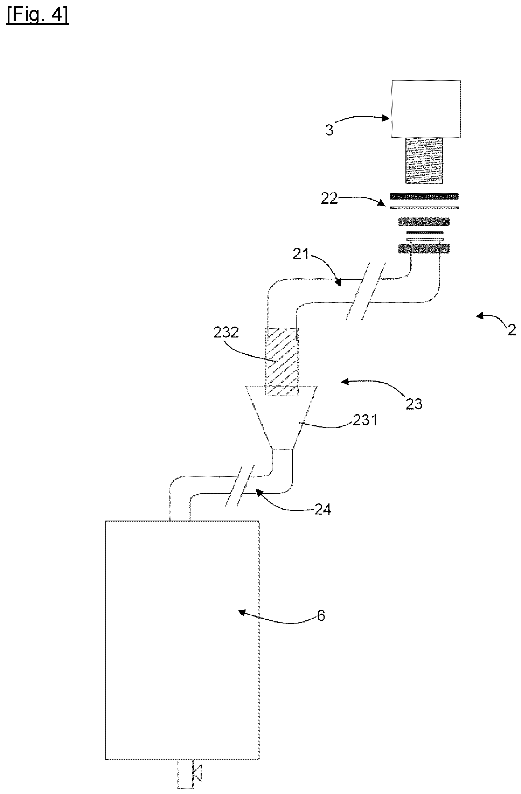

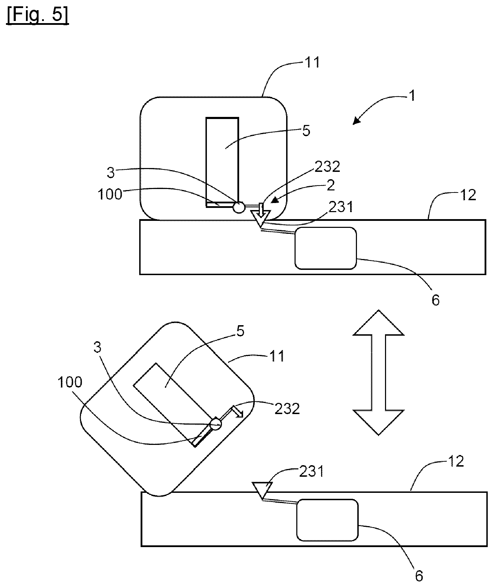

En référence aux figure 4 et 5, un véhicule routier 1 selon l'invention est représenté.

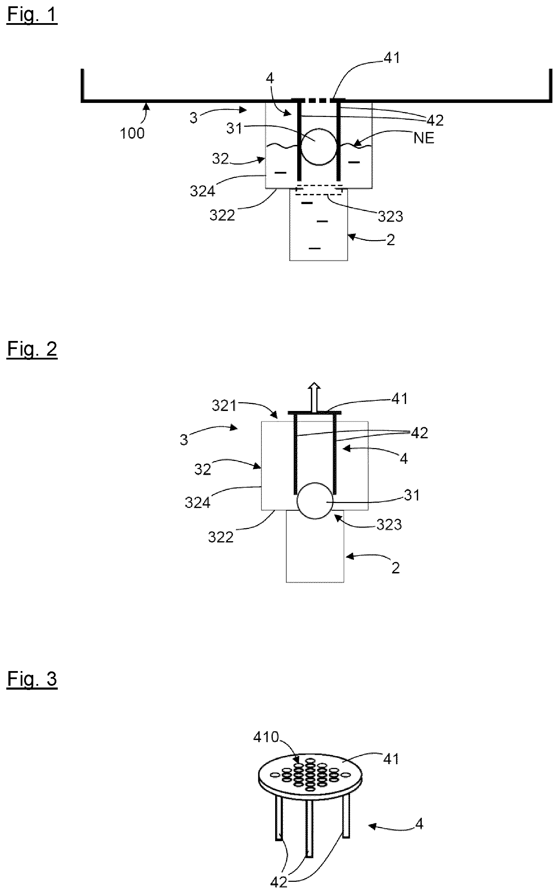

En référence à la figure 1, un système hydraulique anti-refoulement d'air du véhicule routier selon l'invention est représenté.

Le système hydraulique anti-refoulement d'air comprend :
- un bac collecteur 100 d'eau ;
- une évacuation d'eau 2 ;
- un dispositif hydraulique anti-refoulement 3 raccordant le bac collecteur 100 à l'évacuation d'eau 2.

Le bac collecteur 100 d'eau peut correspondre à un bac de douche, une baignoire, ou encore, de manière non limitative, à un évier.

Le dispositif hydraulique anti-refoulement 3 est conçu pour laisser passer de l'eau depuis le bac collecteur 100 d'eau jusqu'à l'évacuation d'eau 2, et pour bloquer ou à tout le moins limiter un refoulement d'air vicié depuis l'évacuation d'eau 2 jusqu'au bac collecteur 100 d'eau.

Tel qu'illustré par les figures 1 et 2, le dispositif hydraulique anti-refoulement 3 comprend un bol collecteur 32 d'eau.

Ce bol collecteur 32 présente une ouverture 321 permettant un passage d'eau depuis le bac collecteur 100, et un fond 322 présentant une sortie 323 débouchant vers l'évacuation d'eau 2

Le bol collecteur 32 présente en outre une paroi périphérique 324 s'étendant depuis un pourtour du fond 322 jusqu'à une extrémité supérieure.

Préférentiellement, le bol collecteur 32 présente une forme symétrique de révolution autour d'un axe central.

Le système comprend également une grille de bonde positionnée au niveau de l'ouverture 321 du bol collecteur.

L'ouverture 321 du bol collecteur 32 peut être réduite par l'ouverture présentée par le bac collecteur 100 sur lequel est couplé le dispositif hydraulique.

Préférentiellement, selon un mode de réalisation non représenté, le bol collecteur 32 forme également un corps de bonde et présente une collerette s'étendant depuis l'extrémité supérieure de la paroi périphérique.

Cette collerette est destinée à venir en appui contre le rebord périphérique supérieur de l'ouverture présentée par le bac collecteur 100.

L'ouverture 321 du bol collecteur 32 peut présenter une section correspondant à la section interne du col collecteur 32, la grille de bonde présentant alors des dimensions supérieures à l'ouverture 321 du bol collecteur 32.

Par exemple, l'ouverture 321 du bol collecteur 32 présente une forme circulaire et la grille de bonde présente une forme de disque d'un diamètre supérieur à celui de l'ouverture 321.

Le dispositif hydraulique anti-refoulement 3 comprend également un bouchon flotteur 31. Ce bouchon flotteur 31 est mobile dans le bol collecteur 32, et plus spécifiquement à l'intérieur d'une cage 4 tel que cela est décrit par la suite, selon un niveau d'eau NE dans le bol collecteur 32.

Ce bouchon flotteur 31 est notamment formé par une sphère selon le présent mode de réalisation. La sphère est par exemple en plastique, et creuse.

Dans ce cas, la sortie 323 présente une forme circulaire.

En effet, le bouchon flotteur 31 présente une section obturatrice de la sortie 323 à l'empreinte d'un rebord de la sortie 323.

Par section obturatrice, il est entendu que le bouchon flotteur présente une surface externe continue complémentaire en forme du rebord de la sortie 323.

En complément de cette surface externe continue, le bouchon flotteur est conçu pour ne pas permettre de communication fluidique une fois accouplé avec le rebord de la sortie 323. De cette manière, de l'air situé dans l'évacuation d'eau 2 ne peut pas ressortir du dispositif quand le bouchon flotteur 31 obture la sortie 323.

Alternativement, selon des modes de réalisation envisageables, le bouchon flotteur 31 pourrait présenter une forme ovoïde, ou tronconique, centrée sur un axe central, et la sortie 323 présenterait une forme également circulaire correspondant à une forme complémentaire à une section du bouchon flotteur 31 le long de son axe central.

Tel qu'évoqué précédemment, le bol collecteur 32 intègre une cage 4.

Cette cage 4 s'étend notamment en hauteur depuis le fond 322 du bol collecteur jusqu'à un plafond 41.

Le bouchon flotteur 31 est prisonnier de cette cage 4, et contraint ses déplacements au sein du bol collecteur 32.

Selon le présent mode de réalisation, la cage 4 est distincte du bol collecteur 32.

Toutefois, il est envisageable des modes de réalisation dans lesquels la cage 4 serait formée partiellement ou totalement par un élément constitutif du bol collecteur 32. Par exemple, la paroi périphérique 324 du bol collecteur pourrait présenter des excroissances internes pour délimiter la cage 4 à l'intérieur du bol collecteur 32.

De manière générale, la cage 4 est conçue de manière à autoriser une communication fluidique entre le bac collecteur 100 d'eau et l'évacuation d'eau 2 dès que le bouchon flotteur 2 n'obture plus hermétiquement la sortie 323, et ce quelque soit sa position dans la cage 4 au-dessus de la position dans laquelle il obture hermétiquement la sortie 323.

En d'autres termes, dès que le bouchon flotteur 31 flotte dans le bol collecteur 31 au-dessus de sa position d'obturation de la sortie 323, alors l'eau collectée dans le bol collecteur 31 peut s'écouler au travers de la sortie 323.

Tel que cela est visible sur les figures 1 à 3, la cage 4 comprend des tiges de guidage 42 s'étendant en direction de la sortie 323.

Plus spécifiquement, la cage 4 comprend trois tiges de guidage 42.

Ces trois tiges de guidage 42 sont positionnées de manière à entourer le bouchon flotteur et à le maintenir entre elles, pour le guider.

Plus spécifiquement, les tiges de guidage 42 s'étendent parallèlement les unes aux autres et n'autorisent qu'un débattement axial de la sphère formant le bouchon flotteur 31. Les trois tiges de guidage 42 sont notamment positionnées à 120° les unes des autres autour d'un axe central de débattement du bouchon flotteur dans la cage 4.

Selon le présent mode de réalisation, le plafond 41 de la cage 4 est formé par la grille de bonde.

Cette grille de bonde présente des ouvertures 410 pour laisser s'écouler de l'eau tout en filtrant d'éventuels débris.

Les tiges de guidage 42 sont solidaires de la grille de bonde et s'étendent depuis une face inférieure de la grille de bonde.

La grille de bonde est montée amovible sur le bol collecteur 32. De cette manière, une extraction de la grille de bonde depuis le bol collecteur permet de retirer les tiges de guidages.

Ceci est particulièrement avantageux pour réaliser un entretien de la grille de bonde, des tiges de guidage, et du bol collecteur.

Le guidage du bouchon flotteur opéré par le dispositif hydraulique anti-refoulement 3 est un guidage s'opérant le long d'un axe destiné à s'étendre parallèlement à un vecteur gravité. Le guidage peut ainsi être qualifié de guidage gravitaire.

En référence aux figure 4 et 5, un véhicule routier 1 selon l'invention est représenté.

Ce véhicule routier 1 comprend un châssis 12 et une cabine 11.

La cabine 11 est montée basculante sur le châssis 12.

Selon le présent mode de réalisation, et tel que représenté sur la figure 5, la cabine 11 est montée basculante sur le châssis 12 du camion routier 1 entre une position basculée (représentée en bas de la figure 5) et une position non-basculée (représentée en haut de la figure 5).

Ce véhicule routier 1 correspond à un poids lourd.

La cabine 11 du véhicule routier 1 comprend une douche 5 et intègre le système hydraulique précédemment décrit.

Le bac collecteur 100 correspond ainsi à un bac de douche, et le dispositif hydraulique anti-refoulement 3 est couplé à ce bac de douche.

Le véhicule routier 1 comprend également une tuyauterie d'évacuation d'eaux usées qui forme l'évacuation d'eau 2. La tuyauterie d'évacuation s'étend du dispositif hydraulique anti-refoulement 3 jusqu'à une réserve d'eau 6.

Cette réserve d'eau 6 est située dans le châssis 12 du véhicule routier 1.

La tuyauterie d'évacuation comprend :
- un raccord emmanchable 23 comprenant une partie femelle 231 portée par le châssis 12, et une partie mâle 232 portée par la cabine 11,
- une première conduite 21 couplée au dispositif hydraulique anti-refoulement 3 à l'aide de moyens de raccordements 22, et s'étendant du dispositif hydraulique anti-refoulement 3 jusqu'à la partie mâle 232 ;
- une seconde conduite 24 s'étendant de la partie femelle 231 jusqu'à la réserve d'eau 6.

Le raccord emmanchable 23 est conçu pour permettre un accouplement et un désaccouplement des deux conduites de la tuyauterie d'évacuation lors du basculement de la cabine 11.

En effet, la partie mâle et la partie femelle sont désolidarisées l'une de l'autre dans une position basculée de la cabine 11, un passage de la cabine 11 de sa position basculée à une position non-basculée entraînant un emmanchement de la partie mâle dans la partie femelle.

La partie femelle 231 assume une forme d'entonnoir orienté pour présenter une ouverture évasée vers le haut, et la partie mâle 232 présente un embout flexible, par exemple en silicone, apte à être guidé par l'ouverture évasée de la partie femelle 611, lors de l'approche finale de la cabine 11 vers le châssis 12, et à s'emmancher dans la partie femelle 611 lorsque la cabine est complétement rabattue sur le châssis 12.

Pour la tuyauterie d'évacuation, il est recherché à éviter le maintien d'une garde d'eau dans au moins la première conduite 21 située dans la cabine 11 après l'évacuation d'une eau collectée. En conséquence, la tuyauterie d'évacuation tend à toujours présenter une pente descendante en direction de la réserve d'eau 6.

Le dispositif hydraulique anti-refoulement 3 est avantageux en ce qu'il ne comprend pas de garde d'eau, en conséquence il est évité que de l'eau de ne se répande dans la cabine 11 lors d'un passage de la cabine 11 vers sa position basculée, ou lors de soubresaut de la cabine 1 lors du déplacement du véhicule routier 1.

De plus, le guidage réalisé par la cage 4 du bouchon flotteur 31 évite que le bouchon flotteur ne se déplace dans le bol collecteur 32 et ne fasse du bruit lorsque le véhicule routier 1 se déplace.

Il ressort de la description qui précède que le système hydraulique anti-refoulement d'air selon l'invention forme une solution simple et peu onéreuse à produire, mais également à entretenir.

## Revendications

1. Véhicule routier (1) comprenant un châssis (12) et une cabine (11) montée basculante sur le châssis (12), la cabine (11) intégrant un système hydraulique anti-refoulement d'air, le système hydraulique comprenant :
- un bac collecteur (100) d'eau ;
- une évacuation d'eau (2) ;
**caractérisé en ce que** le système hydraulique anti-refoulement (3) comprend :
- un dispositif hydraulique anti-refoulement (3) raccordant le bac collecteur (100) à l'évacuation d'eau (2),
le dispositif hydraulique anti-refoulement comprenant :
- un bouchon flotteur (31) ;
- un bol collecteur (32) d'eau présentant une ouverture (321) permettant un passage d'eau depuis le bac collecteur (100), un fond (322) présentant une sortie (323) débouchant vers l'évacuation d'eau (2), et une paroi périphérique (324) s'étendant depuis un pourtour du fond (322) jusqu'à une extrémité supérieure,
le bol collecteur (32) intégrant une cage (4) s'étendant en hauteur depuis le fond (322) du bol collecteur (32) jusqu'à un plafond (41), le bouchon flotteur (31) étant mobile à l'intérieur de la cage (4) selon un niveau d'eau (NE) dans le bol collecteur (32), le bouchon flotteur (31) présentant une section obturatrice de la sortie (323) à l'empreinte d'un rebord de la sortie (323), l'eau collectée dans le bol collecteur s'écoulant au travers de la sortie dès que le bouchon flotteur flotte dans le bol collecteur au-dessus de sa position d'obturation.

2. Véhicule routier selon la revendication précédente, **caractérisé en ce que** la sortie (323) est circulaire, et **en ce que** le bouchon flotteur (31) est formé par une sphère.

3. Véhicule routier selon l'une quelconque des revendications précédentes, **caractérisé en ce que** la cage (4) comprend des tiges de guidage (42) s'étendant en direction de la sortie (323).

4. Véhicule routier selon la revendication précédente, **caractérisé en ce que** les tiges de guidage (42) sont solidaires d'une grille de bonde formant le plafond (41) de la cage (4).

5. Véhicule routier selon la revendication précédente, **caractérisée en ce que** la grille de bonde est montée amovible sur le bol collecteur (32).

6. Véhicule routier selon la revendication 2 et l'une quelconque des revendications 3 à 5, **caractérisé en ce que** les tiges de guidage (42) s'étendent parallèlement les unes aux autres et n'autorisent qu'un débattement axial de la sphère formant le bouchon flotteur (31).

7. Véhicule routier (1) selon l'une quelconque des revendications précédentes, **caractérisé en ce qu'**il comprend une tuyauterie d'évacuation d'eaux usées formant l'évacuation d'eau (2), la tuyauterie d'évacuation comprenant un raccord emmanchable (23) comprenant une partie femelle (231) portée par le châssis (12), et une partie mâle (231) portée par la cabine (11),
la partie mâle et la partie femelle étant désolidarisées l'une de l'autre dans une position basculée de la cabine (11), un passage de la cabine (11) de sa position basculée à une position non-basculée entraînant un emmanchement de la partie mâle dans la partie femelle.
